(19) Europäisches Patentamt
European Patent Office
Office européen des brevets

(11) **EP 0 612 469 B1**

(12) **EUROPÄISCHE PATENTSCHRIFT**

(45) Veröffentlichungstag und Bekanntmachung des Hinweises auf die Patenterteilung:
**21.04.1999 Patentblatt 1999/16**

(51) Int. Cl.$^6$: **A01N 25/00**, A01N 37/10, C11D 3/48

(21) Anmeldenummer: **93103068.8**

(22) Anmeldetag: **26.02.1993**

(54) **Zubereitung mit akarizider Wirkung**

Preparation with acaricidal activity

Préparation à activité acaricide

(84) Benannte Vertragsstaaten:
**AT BE CH DE DK ES FR GB GR IE IT LI LU MC NL PT SE**

(43) Veröffentlichungstag der Anmeldung:
**31.08.1994 Patentblatt 1994/35**

(73) Patentinhaber: **MERCK PATENT GmbH 64271 Darmstadt (DE)**

(72) Erfinder: **Bischoff, Edelbert Dr. D-6719 Kirchheim-Bolanden (DE)**

(56) Entgegenhaltungen:
**EP-A- 173 229          EP-A- 0 125 103 WO-A-89/12673**

- **EXPERIMENTAL & APPLIED ACAROLOGY Bd. 3, Nr. 3, 1987, AMSTERDAM Seiten 179 - 181 G. SCHOBER ET AL. 'control of house-dust mites with home disinfectants'**
- **CHEMICAL PATENTS INDEX, DOCUMENTATION ABSTRACTS JOURNAL Section Ch, Week 9046, 1990 Derwent Publications Ltd., London, GB; Class C, AN 90-346214**

**Beschreibung**

Allergien, die durch Hausstaubmilben bzw. allgemein durch Milben im Hausbereich hervorgerufen werden, erweisen sich, weltweit zunehmend, als sehr ernste Gesundheitsprobleme. Die durch Milbenallergene ausgelösten Krankheiten wie Laryngitis, Rhinitis, Bronchitis mit Steigerung bis zu lebensbedrohendem Asthma oder Dermatitis mit der Möglichkeit der Entwicklung chronischer Symptome entstehen und belasten die Patienten das ganze Jahr über. Grund dafür ist, daß die Allergene der Hausstaubmilben während des gesamten Jahres in den milbenbefallenen Innenräumen und Gegenständen vorhanden sind und z.B. mit Kleidungsstücken, Textilien oder mit Möbeln im gesamten Lebensbereich des Menschen verteilt werden. Der wichtigste Kontaktbereich ist wegen des Befalles und der Expositionsdauer das Bett (Acarologia, T. XXXII, fasc. 4, 1991). Seit Beginn der achziger Jahre wurden die Möglichkeiten und Methoden zur Bekämpfung der Milben und zur Beseitigung der von ihnen produzierten Allergenen mit wachsender Intensität untersucht.

Auch die Welt-Gesundheitsorganisation (WHO) hat sich für die Ergebnisse und Empfehlungen interessiert und sie in ihrem Bulletin veröffentlicht (Bull. WHO 66(6), 769-780 (1988)).

In der Literatur werden physikalische, chemische und physikalisch-chemische Methoden zur Milbenabtötung diskutiert.

Abgesehen von der Beseitigung von Gegenständen, in denen sich Milben bevorzugt aufhalten und die verzichtbar sind, gehören zu den physikalischen Methoden die Erniedrigung der Luftfeuchtigkeit in Innenräumen, das Einhüllen von Polstergegenständen wie Matratzen mit milben- und allergendichten Überzügen sowie das Abtöten der Milben durch extrem tiefe Temperaturen mit Hilfe von flüssigem Stickstoff.

Die chemischen Methoden sind durch die Anwendung verschiedener Akarizide gekennzeichnet. Am besten untersucht und wissenschaftlich belegt sind unter diesen Präparaten diejenigen auf Basis von verfestigtem Benzylbenzoat (Indoor Environ 1, 212-218 (1992).

Auch bei Anwendung der genannten Methoden zur Milbenbekämpfung verbleiben eine ganze Reihe von Gegenständen, die milbenbefallen sein können, von den Patienten in ihrem täglichen Leben benötigt werden und auf den beschriebenen Wegen nicht behandelt werden können. Es sind die Gegenstände, die normalerweise duch die physikalisch-chemische Methode des Waschens gereinigt werden.

Die Milbenabtötung beim Waschen ist in zahlreichen Studien untersucht worden. Diese haben immer wieder ergeben, daß eine Milbenabtötung erst dann eintritt, wenn der Waschvorgang bei Temperaturen von 55 °C oder höher durchgeführt wird (J. Allergy Clin. Immunol. 90, 599-608 (1992)).

Die Wirkung von Detergentien und sonstigen chemischen Substanzen, die in Waschmitteln vorhanden sind, spielt dabei überhaupt keine Rolle.

Dies bedeutet für die Praxis, daß viele Gegenstände, die Waschvorgänge bei Temperaturen von 55° oder höher nicht vertragen, auf diesem Wege nicht milbenfrei gemacht werden können. Zu solchen Gegenständen gehören z.B. Kleidungsstücke, Wäsche und Bettwäsche aus synthetischen Fasern oder Wolle, die bei niedrigen Temperaturen durch Handwäsche oder in der Waschmaschine zu behandeln sind, aber auch Kissen, Bettdecken, Teppiche und dergl., die aus Wolle und/oder synthetischen Fasern bestehen oder damit gefüllt sind. Gegenstände dieser Art werden zwar vielfach beim Waschen bei höheren Temperaturen nicht gerade zerstört, sie klumpen aber oft zusammen und werden dabei unbrauchbar oder unansehnlich. Insbesondere bei Kinderbetten stellen sich diese Probleme häufig.

Ein milbenabtötendes Waschen ist auch dann unmöglich, wenn die Waschmaschinen nicht für die Anwendung von höheren Temperaturen ausgelegt sind. Dies ist beispielsweise vielfach in den USA der Fall.

Überraschenderweise hat sich gezeigt, daß das Problem des milbenabtötenden Waschens - entgegen den Ergebnissen aller bisher durchgeführten Studien - mit den erfindungsgemäßen Mitteln doch auch bei niedrigen Temperaturen gelöst werden kann.

Entscheidend für die Erfindung war die Feststellung, daß bei einem Waschvorgang Anteile von Benzylbenzoat in der Größenordnung unter einem Promille trotz der konkurrierenden Anwesenheit von grenzflächenaktiven und emulgierenden Bestandteilen der handelsüblichen Waschmittel und auch der weiteren Zusätze wie Ablagerungsverhinderungsmittel, Konditionierungsmittel, Füllsubstanzen u.a. genügen, um die gewünschte Milbenabtötung bei niedrigen Temperaturen herbeizuführen.

Dies war keineswegs zu erwarten, denn nach den bisherigen Kenntnissen, wie sie beispielsweise in EP 0 173 229 B1 oder in Allergologie 9, 171-176 (1986) beschrieben sind, sind Konzentrationen zwischen 0,5 und 20 % Benzylbenzoat erforderlich, um die Milben wirksam abzutöten.

Bei diesen Mengenangaben für flüssige milbenabtötende Mittel und für Mittel, die mit Flüssigkeiten verdünnt angewandt werden, ist noch zu beachten, daß die Flüssigkeiten zunächst antrocknen müssen bis die eigentliche Wirksubstanz und dann daraus ein Trockenrückstand entstanden ist. Dieser hat einen noch um 10 bis 90 % höheren Gehalt an Benzylbenzoat als das Ausgangsmittel.

Dieses Wissen um die Mengenverhältnisse in akarizid wirksamen Produkten hat offenbar dazu geführt, daß von Versuchen zur Milbenabtötung in Waschprozessen abgesehen wurde. Bei vergleichbaren prozentualen Anteilen hätte man mit Wirkstoffmengen von 1 bis 2 l Benzylbenzoat bei Waschflotten von 25 l oder mehr rechnen müssen. Im Falle des Waschens ist auch ein Konzentrieren des akariziden Wirkstoffes durch Antrocknen nicht möglich, da die jeweilige Waschflotte äbgesaugt und unmittelbar danach durch Spülflotten ersetzt wird.

Die erfindungsgemäßen Mittel eignen sich hauptsächlich für zwei Anwendungsrichtungen:

(A) Inkorporierung der akariziden Zübereitungen in bekannte oder den bekannten analogen Rezepturen flüssiger oder pulverförmiger Waschmittel.

(B) Herstellung eines Konzentrates, welches gegebenenfalls als Zusatz den handelsüblichen Waschmitteln beigefügt werden kann, mit diesen Mitteln verträglich ist und somit in den vorgeschriebenen Anwendungskonzentrationen die gewünschte Wirkung herbeiführt.

Die zuletzt genannte Anwendungsrichtung ist die bevorzugte.

Als akarizide Wirkstoffe können Benzylalkohole, hochsiedende Ester der Benzoe - oder Salicylsäure sowie gemischte und einfache Phthalsäureester, wie z.B. Phthalsäuredimethylester, -diethylester, -dibutylester, -dioctylester-, oder -benzylbutylester verwendet werden. Bevorzugt sind Benzylalkohol, Alkyl-, Phenyl- oder Benzylester der Benzoesäure, wobei die aromatischen Reste der Wirkstoffe in der Regel unsubstituiert sind. Sie können aber auch ein-, zwei- oder dreifach substituiert sein. Besonders bevorzugt ist Benzoesäurebenzylester (Benzylbenzoat).

Neben den eigentlichen Wirkstoffen, die gegebenenfalls auch in Mischungen eingesetzt werden können, können die Zubereitungen weitere an sich bekannte Zusatz- oder Hilfsstoffe enthalten. Geeignete Additive sind beispielsweise Tenside, Verdickungsmittel, Emulgatoren, Lösungsmittel, Füllmittel, Parfüme sowie Konservierungsmittel.

Im einzelnen werden als Tenside beispielsweise die bei textilen Reinigungsverfahren üblichen anionaktiven, nicht ionogenen, kationaktiven oder amphoteren Stoffe, wie sulfonierte aromatische Kohlenwasserstoffe, z.B. n-Alkylbenzolsulfonate; sulfonierte aliphatische Kohlenwasserstoffe, z.B. sekundäres Alkansulfonat; sulfoniertes Alpha-Olefin, sulfatierter Fettalkohol, z.B. Natriumlaurylsulfat; sulfatierter Fettalkoholether, z.B. Natriumlaurylpropylglykolethersulfat; sulfonierte Fettsäuremethylester, z.B. Palmkernsulfofettsäuremethylester; Natriumparaffinsulfonat; sulfonierte Maleinsäureester, z.B. Laurylsulfosuccinat; carboxymethylierte Fettalkoholpolyglykolether, z.B. Laurylpolyglykoletheracetat, verwenden. Als nichtionische Tensid-Beispiele sind zu nennen: Fettalkoholethoxylat, Alkylphenolethoxylat, Fettsäureethoxylat, Fettsäurealkylolamid, Fettsäurealkylolamidethoxylat, Fettaminethoxylat, Polyalkylenoxid-Blockpolymerisate. Als kationische Tenside sind quaternäre Ammoniumverbindungen zu nennen. Beispiele für Ampholyte sind Betaine.

Weitere Zusatz- oder Hilfsstoffe können beispielsweise $C_{12}$-$C_{18}$ Fettsäuren, Gemische derselben oder ihre Natrium- oder Kaliumsalze, $C_{12}$-$C_{16}$ Fettalkohole mit 1-10 Hydroxygruppen, Ether wie Diethylenglykolmonoethylether, Alkylphenole, Fettamine, Alkylglucoside, Fettsäuremono-, di- bzw. -polyalkylolamide oder Alkylbenzolsulfonsäuren sowie Kalium- oder Natriumhydroxid, Wasser, Alkohole wie Ethanol und Glykole wie Ethylendiglykol oder 1,2-Propylenglykol sein.

Bewährt haben sich auch Mischungen von Zusatzstoffen wie Marlowet RNP/K®, Marlowet R40/K®, Elfan 243®, Lutensol®, Marlon A® oder Comperlan®, die im Handel angeboten werden.

Die erfindungsgemäßen Zubereitungen können als akarizide Feinwaschmittel oder als akarizide Waschmittelzusätze, besonders bevorzugt als Konzentrate, vorliegen. Die Zubereitungen, insbesondere die Feinwaschmittel, können alkalisch, d.h. seifenhaltig oder pH-neutral sein.

Besonders bewährt haben sich erfindungsgemäße Zubereitungen, zur Abtötung von Milben bei Waschvorgängen, der folgenden Zusammensetzung:

I) Akarizide Feinwaschmittel (alkalisch)

|  | Gew.-% | Gew.-% |
|---|---|---|
| Wasser, dest. | 10 -70 | vorzugsweise 40 -60 |
| Fettsäuren | 5 -25 | vorzugsweise 10 -20 |
| Kalilauge (45%ig) | 1 -20 | vorzugsweise 3 -10 |
| Fettalkohole | 1 -20 | vorzugsweise 5 -10 |

(fortgesetzt)

| | Gew.-% | Gew.-% |
|---|---|---|
| Alkylbenzolsulfonate | 5 -25 | vorzugsweise 10 -20 |
| Ethanol | 1 -20 | vorzugsweise 3- 10 |
| Ethylendiglykol | 0,1-10 | vorzugsweise 0,5- 5 |
| akarizider Wirkstoff | 1 -20 | vorzugsweise 2 -10 |

## II. Akarizide Feinwaschmittel (neutral)

| | Gew.-% | Gew.-% |
|---|---|---|
| Wasser, dest. | 20-70 | vorzugsweise 40-60 |
| Fettsäuren | 1-20 | vorzugsweise 3-15 |
| Alkylbenzolsulfonate | 2-30 | vorzugsweise 5-25 |
| Ethanol | 0-15 | vorzugsweise 0-10 |
| Ethylendiglykol | 0-10 | vorzugsweise 0- 3 |
| 1,2-Propylenglykol | 0-10 | vorzugsweise 0- 5 |
| akarizider Wirkstoff | 1-20 | vorzugsweise 2-10 |
| sowie gegebenenfalls 0-30 Gew.-% Emulgatoren und 0-1 Gew.-% Fettsäuremono-, -di- bzw. -polyalkylolamide. | | |

## III. Akarizide Waschmittelkonzentrate

| | Gew.-% | | Gew.-% |
|---|---|---|---|
| Wasser, dest. | 0-20 | vorzugsweise | 0-10 |
| Emulgatoren | 10-60 | " | 25-55 |
| Laurylethersulfate<br>Laurylethersulfat, Mg-Salz | 10-50 | " | 15-40 |
| akarizider Wirkstoff | 10-50 | " | 20-40 |

Die mit den erfindungsgemäßen Zubereitungen zu behandelnden textilen Gebrauchsgegenstände entstammen denjenigen Bereichen, in den das Vorkommen von Milben festgestellt wurde. Dies sind insbesondere Kleidungsstücke jeglicher Art, Teppiche, Bettwäsche, Decken, Kopfkissen, Betten, Matratzen, Füllungen von Kissen und Betten, Auflagen von Polstermöbeln und alle anderen waschbaren Materialien. Dabei können die Gegenstände aus natürlichen oder synthetischen Fasern bestehen. Die Waschtemperatur beträgt 20-55 °C, besonders bevorzugt ist eine Temperatur von 25-50 °C.

Die nachfolgenden Beispiele erläutern die Erfindung ohne diese in ihrer Anwendung zu beschränken.

Beispiel 1

Akarizides Feinwaschmittel (alkalisch)

| | Gew.-% |
|---|---|
| Wasser, dest. | 44,1 |
| Fettsäuren ($C_{12}$-$C_{18}$) | 12,0 |
| Kalilauge (45%ig) | 6,5 |
| Lutensol AO 10[®] | 10,0 |
| Marlon A 365[®] (65%ig) | 15,4 |
| Ethanol | 6,0 |
| Ethylendiglykol | 1,0 |
| Benzylbenzoat | 5,0 |
| | 100,0 Gew.-% |

Beispiel 2

Akarizides Feinwaschmittel (neutral)

| | Gew.-% |
|---|---|
| Wasser, dest. | 52,0 |
| Lutenosol AO 10[®] | 10,5 |
| Lutenosol AO 3[®] | 3,5 |
| Marlon A 365[®] (65%ig) | 21,5 |
| Ethanol | 6,0 |
| Ethylendiglykol | 1,0 |
| Kokosfettsäurediethanolamid | 0,5 |
| Benzylbenzoat | 5,0 |
| | 100,0 Gew.-% |

Beispiel 3

Akarizides Feinwaschmittel (neutral)

|  | Gew.-% |
|---|---|
| Wasser, dest. | 57,5 |
| Lutenosol AO 10® | 5,0 |
| Marlon A 365® (65%ig) | 7,5 |
| Marlowet RNP® | 20,0 |
| 1,2-Propylenglykol | 5,0 |
| Benzylbenzoat | 5,0 |
|  | 100,0 Gew.-% |

Beispiel 4

Akarizides Waschmittelkonzentrat

|  | Gew.-% |
|---|---|
| Wasser, dest. | 10,0 |
| Marlowet RNP/K® | 40,0 |
| Laurylethersulfat, Mg-Salz | 20,0 |
| Benzylbenzoat | 30,0 |
|  | 100,0 Gew.-% |

Beispiel 5

Akarizides Waschmittelkonzentrat

|  | Gew.-% |
|---|---|
| Marlowet RNP/K® | 45,0 |
| Marlowet R 40/K® | 5,0 |
| Laurylethersulfat, Mg-Salz | 20,0 |
| Benzylbenzoat | 30,0 |
|  | 100,0 Gew.-% |

Beispiel 6

Akarizides Waschmittelkonzentrat

|  | Gew.-% |
|---|---|
| Marlowet RNP/K® | 35,0 |
| Marlowet R 40/K® | 5,0 |
| Laurylethersulfat, Mg-Salz | 30,0 |
| Benzylbenzoat | 30,0 |
|  | 100,0 Gew.-% |

Die vorstehend genannten akariziden Waschmittel- bzw. Waschmittelkonzentrate wurden hinsichtlich ihrer Wirksamkeit bei der Abtötung von Milben während des Waschvorganges untersucht.

Die akarizide Waschwirkung wurde an verschmutzten und extrem milbenbefallenen Teilstücken von Teppichen untersucht. Die durchschnittliche Milbenzahl bei den für die Untersuchungen benutzten Teppichproben von 1/4 qm Größe lag bei ca. 38500 Milben (das entspricht ca. 150 000 Stck./m$^2$). Untersucht wurden jeweils Teilstücke von 175 cm$^2$.

Die folgenden Beispiele A und B beschreiben die Waschversuche und geben die entsprechend aufgefundene Milbenpopulation an. Die Milbenpopulation wurde nach dem Wärmeflucht-Verfahren (Rev. fr. Allergol. 28, 115-122 (1988)) ermittelt. Es handelt sich dabei um eine direkte Zählung.

Beispiel A

Feststellung der Wirkung des akariziden Feinwaschmittels aus Beispiel 2.

Versuchsdurchführung im handelsüblichen Waschvollautomat.

Einstellung:        Pflegeleicht; Hauptwäsche; fein
Bedingungen:        25 l Waschlauge, Waschtemperatur 30 °C
Waschgegenstände: verschmutzte und stark milbenbefallene Teppichstücke (ca. 14 x 12,5 cm) als Teilstücke aus naturanalogem Milben-Biotop auf einem Teppich (100 x 25 cm)

| Versuch | Methode | Waschmittelmenge [g] | Konz. d. Wirkstoffs [‰] | Durchführung | lebende Milben [Stck.] |
|---|---|---|---|---|---|
| 1 | 0-Stufe | 0 | 0 | kein Waschen | 2770 |
| 2 | 0-Stufe | 0 | 0 | kein Waschen | 2600 |
| 3 | Waschen | 170 | 0,34 | Waschen, Trocknen | 0 |
| 4 | Waschen | 170 | 0,34 | Waschen, Trocknen | 0 |
| 5 | Waschen | 120 | 0,24 | Waschen, Trocknen | 1 |
| 6 | Waschen | 120 | 0,24 | Waschen, Trocknen | 0 |
| 7 | Waschen | 170[1] | wirkstofffrei | Waschen, Trocknen | 198 |
| 8 | Waschen | 170[1] | wirkstofffrei | Waschen, Trocknen | 662 |

[1] Feinwaschmittel gemäß Bsp. 2 ohne Benzylbenzoat

Bei den Versuchen 1 und 2 wurde nicht gewaschen. Sie zeigen als Null-Stufe die ursprünglichen Milbenzahlen.

Nach dem Waschen mit einem akariziden Feinwaschmittel - Versuche 3 bis 6 - bleiben davon lediglich 0 oder 1 Milbe übrig. Das Waschen mit einem nicht akariziden Waschmittel kann die Milben nicht beseitigen, sondern nur reduzieren. Dies zeigen die Versuche 7 und 8. Die Anzahl der in diesen Fällen verbleibenden Milben (ca. 200 bis 700) bedeutet bei biologischen Versuchen keine ins Gewicht fallende Verbesserung, denn die überlebenden Milben vermehren sich bei gleichen Klimabedingungen und vergleichbarem Futterangebot schnell wieder zu den ursprünglichen Mengen.

Beispiel B

Feststellung der akariziden Wirkung des Waschmittelkonzentrats aus Beispiel 5.

Die Feststellung der Wirkung erfolgte als Zusatz zu handelsüblichen Waschmitteln.

Versuchsdurchführung im handelsüblichen Waschvollautomat.

Einstellung:          Pflegeleicht; Hauptwäsche; fein
Bedingungen:          25 l Waschlauge, Waschtemperatur 30 °C
Waschgegenstände: verschmutzte und stark milbenbefallene Teppichstücke (ca. 14 x 12,5 cm) als Teilstücke aus naturanalogem Milben-Biotop auf einem Teppich (100 x 25 cm)

| Versuch | Methode | Waschmittelmenge [ml] | Konzentrat [ml] | Konz.d. Wirkstoffs [‰] | Durchführung | lebende Milben [Stck.] |
|---|---|---|---|---|---|---|
| 1 | 0-Stufe | 0 | 0 | 0 | kein Waschen | 1683 |
| 2 | Waschen | 120 | 0 | 0 | Waschen, Trocknen | 926 |
| 3 | Waschen | 120 | 0 | 0 | Waschen, Trocknen | 1232 |
| 4 | Waschen | 120 | 0 | 0 | Waschen, Trocknen | 521 |
| 5 | Waschen | 90 | 25 | 0,3 | Waschen, Trocknen | 0 |
| 6 | Waschen | 90 | 25 | 0,3 | Waschen, Trocknen | 0 |
| 7 | Waschen | 90 | 25 | 0,3 | Waschen, Trocknen | 0 |
| 8 | Waschen | 90 | 25 | 0,3 | Waschen, Trocknen | 1 |
| 9 | Waschen | 90 | 25 | 0,3 | Waschen, Trocknen | 0 |
| 10 | Waschen | 90 | 25 | 0,3 | Waschen, Trocknen | 1 |

Auch für die Versuche entsprechend Beispiel B wurde ein stark milbenbefallener Teppich benutzt. In diesem Falle lag die Milbenzahl bei ca. 16000 pro 1/4 qm (was ca. 64000 Milben pro $m^2$ entspricht).

Die Null-Stufe ohne Waschen (Versuch 1) zeigt wiederum die ungefähre ursprüngliche Milbenzahl an einem der Teilstücke von ca. 260 $cm^2$. Die durchschnittliche Milbenzahl für den Teppich von 1/4 qm Größe liegt bei ca. 16300 (das entspricht ca. 65000 pro $m^2$).

Mit den Versuchen 2 bis 4 werden die Milbenzahlen festgestellt (an jeweils einem Teilstück), die nach dem Waschen mit drei handelsüblichen Flüssigwaschmitteln zu finden sind. Für die Restbestände von 500 bis 1200 Milben pro Teppichteilstück gilt das bereits Gesagte. Die Waschmittelmengen lagen bie 120 ml pro 25 l Waschflotte.

Fügt man die akariziden Zusatz-Konzentrate in der Menge von 25 ml der Waschflotte von 25 l zu, so kann die Waschmittelmenge in der Regel bei gleichem Waschergebnis um 10 bis 20 % verringert werden. Bei den Versuchen wurden 90 ml handelsübliches Waschmittel verwendet. Die nach dem Waschen mit Waschmittel und akarizidem Zusatz 1 ‰ in der Waschflotte gefundenen Milbenzahlen liegen zwischen 0 und 1. Damit ist die gewünschte Milbenabtötung erreicht. Die Mittel selbst sind durch die üblichen Spülvorgänge beseitigt.

**Patentansprüche**

1. Zubereitung zur Abtötung von Milben bei Waschvorgängen durch Handwäsche oder in der Waschmaschine, dadurch gekennzeichnet, daß es sich um ein akarizides Feinwaschmittel mit folgender Zusammensetzung handelt:

   Wasser, dest. 10-70 Gew.-%, Fettsäuren 5-25 Gew.-%, Kalilauge (45%ig) 1-20 Gew.-%, Fettalkohole 1-20 Gew.-%, Alkylbenzolsulfonate 5-25 Gew.-%, Ethanol 1-20 Gew.-%, Ethylendiglykol 0,1-10 Gew.-%, akarizider Wirkstoff 1-20 Gew.-%.

2. Zubereitung zur Abtötung von Milben bei Waschvorgängen durch Handwäsche oder in der Waschmaschine, dadurch gekennzeichnet, daß es sich um ein akarizides Feinwaschmittel mit folgender Zusammensetzung handelt:

   Wasser, dest. 20-70 Gew.-%, Fettsäuren 1-20 Gew.-%, Alkylbenzolsulfonate 2-30 Gew.-%, Ethanol 0-15 Gew.-%, Ethylendiglykol 0-10 Gew.-%, 1,2-Propylenglykol 0-10 Gew.-%, akarizider Wirkstoff 1-20 Gew.-% sowie gegebenenfalls 0-30 Gew.-% Emulgatoren und 0-1 Gew.-% Fettsäuremono-, -di- bzw. -polyalkylolamide.

3. Zubereitung zur Abtötung von Milben bei Waschvorgängen durch Handwäsche oder in der Waschmaschine, dadurch gekennzeichnet, daß es sich um ein Waschmittelkonzentrat handelt, welches folgende Zusammensetzung aufweist:

   Wasser, dest. 0-20 Gew.-%, Emulgatoren 10-60 Gew.-%, Laurylethersulfate oder Laurylethersulfat, Mg-Salz 10-50 Gew.-%, akarizider Wirkstoff 10-50 Gew.-%.

4. Zubereitungen nach einem oder mehreren der vorhergehenden Ansprüchen, dadurch gekennzeichnet, daß als akarizide Wirkstoffe Benzylalkohol und/oder Benzylbenzoat verwendet werden.

5. Zubereitungen nach einem oder mehreren der vorhergehenden Ansprüchen, dadurch gekennzeichnet, daß sie in einer Mischung mit einem handelsüblichen pulverförmigen oder flüssigen Waschmittel vorliegen.

6. Verwendung von Zubereitungen gemäß der Ansprüche 1-4 zur Abtötung von Milben in waschbaren Materialien während eines Waschvorganges durch Handwäsche oder in der Waschmaschine bei Konzentrationen des akariziden Wirkstoffes zwischen 0,04 und 0,01 % in bezug auf das Gesamtvolumen der Waschlösung.

7. Verwendung gemäß Anspruch 6, dadurch gekennzeichnet, daß der Waschvorgang bei Temperaturen unterhalb von 55° C erfolgen kann.

8. Verwendung von Zubereitungen gemäß Anspruch 5, dadurch gekennzeichnet, daß die Milben in Textilien oder Bettwäsche und in Gegenständen mit Füllungen, wie Kissen oder Decken, abgetötet werden.

9. Verwendung von Zubereitungen gemäß der Ansprüche 1-4, dadurch gekennzeichnet, daß die Milbenabtötung sowohl in Kunst- als auch in Naturfasern während des Waschens erfolgt.

**Claims**

1. Preparation for killing mites during washing operations by hand or in a washing machine, characterized in that it is an acaricidal light-duty detergent having the following composition: water, dist. 10-70% by weight, fatty acids 5-25% by weight, potassium hydroxide solution (45% strength) 1-20% by weight, fatty alcohols 1-20% by weight, alkylbenzenesulfonates 5-25% by weight, ethanol 1-20% by weight, ethylene diglycol 0.1-10% by weight, and acaricidal active ingredient 1-20% by weight.

2. Preparation for killing mites during washing operations by hand or in a washing machine, characterized in that it is an acaricidal light-duty detergent having the following composition: water, dist. 20-70% by weight, fatty acids 1-20% by weight, alkylbenzenesulfonates 2-30% by weight, ethanol 0-15% by weight, ethylene diglycol 0-10% by weight, 1,2-propylene glycol 0-10% by weight, acaricidal active ingredient 1-20% by weight and optionally 0-30% by weight of emulsifiers and 0-1% by weight of fatty acid mono-, di- and polyalkylolamides.

3. Preparation for killing mites during washing operations by hand or in a washing machine, characterized in that it is a detergent concentrate having the following composition: water, dist. 0-20% by weight, emulsifiers 10-60% by weight, lauryl ether sulfates or lauryl ether sulfate, Mg salt 10-50% by weight, and acaricidal active ingredient 10-50% by weight.

4. Preparations according to one or more of the preceding claims, characterized in that the acaricidal active ingredients are benzyl alcohol and/or benzyl benzoate.

5. Preparations according to one or more of the preceding claims, characterized in that they are in the form of a mixture with a commercially available pulverulent or liquid detergent.

6. Use of the preparations according to Claims 1-4 for killing mites in washable materials during a washing operation by hand or in a washing machine at concentrations of the acaricidal active ingredient of between 0.04 and 0.01%, based on the total volume of the wash solution.

7. Use according to Claim 6, characterized in that the washing operation can take place at temperatures below 55°C.

8. Use of preparations according to Claim 5, characterized in that the mites in textiles or bedlinen and in articles with fillings, such as pillows or duvets, are killed.

9. Use of preparations according to Claims 1-4, characterized in that the mites are killed both in synthetic and natural fibres during washing.

**Revendications**

1. Préparation pour détruire les acariens dans les opérations de lavage à la main ou en machine, caractérisée en ce qu'il s'agit d'un détergent acaricide fin ayant la composition suivante :

   eau distillée 10-70 % en poids, acides gras 5-25 % en poids, hydroxyde de potassium en solution à 45 % 1-20 % en poids, alcools gras 1-20 % en poids, alkylbenzènesulfonates 5-25 % en poids, éthanol 1-20 % en poids, éthylèneglycol 0,1-10 % en poids, matière active acaricide 1-20 % en poids.

2. Préparation pour détruire les acariens dans les opérations de lavage à la main ou en machine, caractérisée en ce qu'il s'agit d'un détergent acaricide fin ayant la composition suivante :

   eau distillée 20-70 % en poids, acides gras 1-20 % en poids, alkylbenzènesulfonates 2-30 % en poids, éthanol 0-15 % en poids, éthylènediglycol 0-10 % en poids, 1,2-propylèneglycol 0-10 % en poids, matière active acaricide 1-20 % en poids, et éventuellement 0-30 % en poids d'èmulsifiants et 0-1 % en poids de mono-, di- ou polyalkylolamides d'acides gras.

3. Préparation pour détruire les acariens dans les opérations de lavage à la main ou en machine, caractérisée en ce qu'il s'agit d'un concentré de détergent qui a la composition suivante :

   eau distillée 0-20 % en poids, émulsifiants 10-60 % en poids, lauryléthersulfates ou lauryléthersulfate de Mg 10-50 % en poids, matière active acaricide 10-50 % en poids.

4. Préparations selon l'une ou plusieurs des revendications précédentes, caractérisées en ce que les matières actives acaricides utilisées sont l'alcool benzylique et/ou le benzoate de benzyle.

5. Préparations selon l'une ou plusieurs des revendications précédentes, caractérisées en ce qu'elles se présentent en mélange avec un détergent en poudre ou liquide du commerce.

6. Utilisation de préparations selon les revendications 1 à 4 pour détruire les acariens dans des produits lavables pendant une opération de lavage à la main ou en machine, à des concentrations de la matière active acaricide comprises entre 0,04 et 0,01 % par rapport au volume total de la solution de lavage.

7. Utilisation selon la revendication 6, caractérisée en ce que l'opération de lavage peut être réalisée à des températures inférieures à 55°C.

8. Utilisation de préparations selon la revendication 5, caractérisée en ce que les acariens sont détruits dans des textiles ou des articles de literie et dans des objets comportant des rembourrages, tels que les oreillers ou les couvertures.

9. Utilisation de préparations selon les revendications 1 à 4, caractérisée en ce que la destruction des acariens a lieu pendant le lavage tant des fibres artificielles que dans des fibres naturelles.